**Europäisches Patentamt**

**European Patent Office**

**Office européen des brevets**

(19)

(11) Publication number: **0 009 102**
**B1**

(12) **EUROPEAN PATENT SPECIFICATION**

(45) Date of publication of patent specification: **20.04.83**

(21) Application number: **79102749.3**

(22) Date of filing: **01.08.79**

(51) Int. Cl.³: **G 08 C 19/40,**
**H 02 K 24/00, G 01 D 5/20**

(54) **A multipolar resolver.**

(30) Priority: **25.09.78 JP 118206/78**

(43) Date of publication of application:
**02.04.80 Bulletin 80/7**

(45) Publication of the grant of the patent:
**20.04.83 Bulletin 83/16**

(84) Designated Contracting States:
**CH DE FR GB IT NL SE**

(56) References cited:
**DE - A - 2 301 483**
**DE - B - 1 054 354**
**FR - A - 1 434 753**
**US - A - 2 866 913**

**THE BELL SYSTEM TECHNICAL JOURNAL, vol. 36, pages 1487—1500, November 1957, New York (US) G. KRONACHER: "Design, performance, and application of the vernier resolver", Bell Telephone System Technical Publications, monograph 2906.**

(73) Proprietor: **Okuma Machinery Works Ltd.**
**32, Tsujimachi-1-chome**
**Kita-ku, Nagoya-shi (JP)**

(72) Inventor: **Toida, Ryuji**
**20, Kamiiidaminamimachi-3-chome**
**Kita-ku, Nagoya (JP)**
Inventor: **Sakai, Yuji**
**16-1-109 Jiyugaoka-1-chome**
**Chikusa-ku, Nagoya (JP)**
Inventor: **Ikegami, Mitsuru**
**1097-34, Aza Nogata**
**Koonjicho, Kita-ku, Nagoya (JP)**

(74) Representative: **Wallach, Curt, Dipl.-Ing. et al,**
**Kaufingerstrasse 8**
**D-8000 München 2 (DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

# A multipolar resolver

The invention relates to a multipolar resolver comprising a substantially cylindrical rotor of magnetic material with A·n rotor poles provided equidistantly on the outer periphery thereof, a stator of magnetic material with B·n stator poles provided equidistantly along the circumference concentric with the axis of said rotor, wherein A, B and n are positive integers and wherein the value of A differs from the value of B by one such that | A—B |=1, and a central coil provided on said stator along substantially the same axis as said rotor axis.

Generally, resolvers are of dual polarity and have a stator wound with two different types of coils, i.e., sine and cosine coils at an electrical angle of 90 degrees. The rotor is also wound with sine and cosine coils. In the case of resolvers used for position detecting instead of calculation, however, it is often sufficient if only one type of coil is wound on either stator or rotor. Presently, brushless resolvers are widely used which have only one type of coil on the rotor.

In these conventional resolvers it is necessary to provide the rotor with a coil and therefore most commercially available resolvers have only few poles, for instance two poles. Such two-pole resolvers comprise a single rotor coil wound on a rotor rotatably disposed within a stator having a sine coil and a cosine coil wound on a total of 4 stator pole pieces. If the number of resolver poles is increased to four or six in this conventional construction the number of stator pole pieces has to be increased to eight or twelve, respectively and the rotor geometry is increasingly complicated so that the general configuration is complicated and the dimension of the resolver is increased.

Further, there is known a rotational angle detector as set out in the pre characterizing part of claim 1 (German patent specification 2 301 483) wherein the principle of the vernier scale is used. This rotational angle detector is provided with a coil at substantially the central part of the stator for generating magnetic fluxes while a coil for detecting the rotational angle of the rotor is provided on each of a plurality of stator poles positioned along the circumference having the same axis as the rotor. The rotor is a disc-like rotor of magnetic material including for instance eleven radially equidistantly disposed arms whereas the stator in this case has ten stator poles wound with coils. Upon application of an exciting voltage to the rotor coil, magnetic fluxes generated by this coil pass through the rotor, rotor arms, stator poles and stator, thus producing an induced voltage in the stator coil. Since the difference between the number of stator poles and the number of rotor arms is one, only one of the stator poles is opposed to or aligned with only one of the arms of the rotor all the time according to the principle of the vernier scale. The rotational angle of the rotor is detected by detecting the stator coil from which an induced voltage is generated. This known construction provides for an increase of the number of poles of the resolver without a corresponding increase in manufacturing coast and complexity of the resolver.

The paper entitled "Design, performance, and application of the vernier resolver"; Bell Telephone System Tech. Pubs. monograph 2906; The Bell System Tech. Journal, vol. 36, pp. 1487—1500; Nov. 1957; by G. KRONACHER, discloses a third order vernier resolver. The unit consists of a laminated rotor with three equally spaced teeth and a laminated 4-pole-shoe stator. Each pole-shoe bears one exciting coil and one output coil. Successive exciting coils are wound in opposite directions, connected in series, and energized from an ac source. Thus, successive pole-shoe fields alternate in phase. The two output windings each consist of two diametrical output coils connected in phase opposition.

The object of the present invention is to provide a multipolar resolver which permits an increase in the number of poles of the resolver without a corresponding increase in complexity and manufacturing cost.

This object is achieved by a resolver as set out in claim 1 to which reference should now be made.

The advantage offered by the invention is that the number of resolver poles may be increased without a corresponding increase in complexity and manufacturing cost of the multipolar resolver.

In operation of this multipolar resolver either the central coil or the sine and cosine coils may be excited and voltages representing the rotational angle of said rotor may be derived either from the sine and cosine coils or the central coil, respectively.

One way of carrying out the invention is described in detail below with reference to drawings which illustrate only one specific embodiment in which:

Fig. 1A and 1B are a plan view schematically showing the construction of a multipolar resolver in accordance with the invention and a sectional view taken in the line IVB—IVB, respectively;

Fig. 2A to 2E are diagrams for explaining the operation of the multipolar resolver shown in fig. 1A and 1B;

Fig. 3 a diagram for explaining the operating principle of the multipolar resolver shown in figures 1A and 1B;

Fig. 4 is a graph showing $\sin \theta_E$ which is the sine component of the output voltage of the multipolar resolver shown in figures 1A and 1B;

Fig. 5 is a graph showing sinus $\theta_E$ which is the sine component of the output voltage of a multipolar resolver according to another embodiment of the invention.

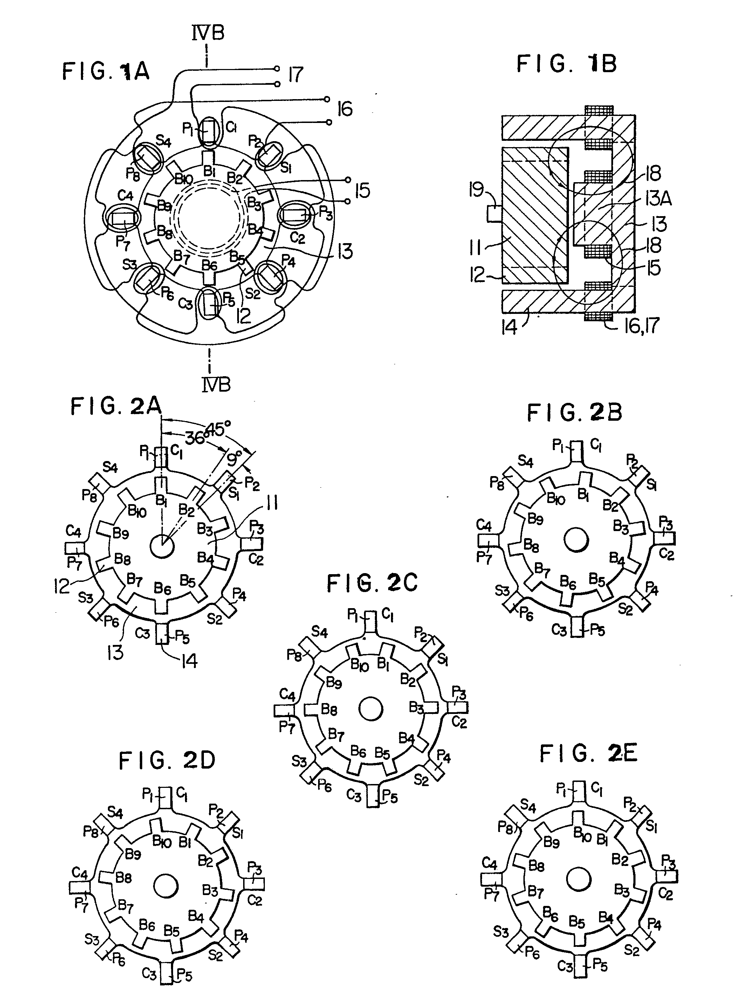

An embodiment of the multipolar resolver according to the present invention will be described below with reference to figs. 1A and 1B. In the drawings, the substantially cylindrical rotor 11 made of a magnetic material such as ferrite requiring no coils includes a rotor shaft 19 and ten rotor poles 12 designated by $B_1$ to $B_{10}$ equidistantly arranged on the outer periphery thereof. The substantially disc-shape stator 13 of magnetic material such as ferrite includes a protrusion 13A at substantially the central part thereof and eight stator poles 14 designated by $P_1$ to $P_8$ arranged substantially equidistantly on the outer periphery and extending in the same direction as the axis 19 of the rotor. The stator protrusion 13A is wound with the central coil 15, and the bases of the stator poles $P_2$, $P_4$, $P_6$, and $P_8$ are wound with sine coils 16, while the poles $P_1$, $P_3$, $P_5$ and $P_7$ are wound with cosine coils 17. As apparent from the drawings, the poles $P_2$, $P_4$, $P_6$, $P_8$ wound with the sine coils 16 are arranged on the outer periphery of the stator 13 alternately with the poles $P_1$, $P_3$, $P_5$, $P_7$ wound with the cosine coils 17. The coils $S_1$, $S_2$, $S_3$ and $S_4$ of the poles $P_2$, $P_4$, $P_6$ and $P_8$ are connected in series with each other. The coils $C_1$, $C_2$, $C_3$ and $C_4$ of the poles $P_1$, $P_3$, $P_5$ and $P_7$ are also connected in series with each other. The sine coils 16 are connected in series with each other in opposite directions of winding in such a manner that the polarity of the output voltage may be reversed at the electrical angle of 180 degrees. In other words, the sine coils are wound in the counterclockwise direction on the stator poles $P_2$ and $P_6$ and in the clockwise direction on the poles $P_4$ and $P_8$. In similar fashion, the cosine coils 17 are wound on the stator poles $P_1$ and $P_5$ in the counterclockwise direction and on the poles $P_3$ and $P_7$ in the clockwise direction. The substantially cylindrical rotor 11 is rotatably arranged in a substantially concave cylindrical space formed by the side walls of the stator protrusion 13A and a plurality of stator poles 14. The side wall of the stator protrusion 13A is thus arranged in proximity to the side surface of the rotor perpendicular to the rotor shaft 19. Also, the rotor pole 12 and the stator pole 14 are arranged in proximity to each other. The stator 13 is preferably formed integrally with the stator poles 14. The magnetic fluxes 18 generated by the excitation of the central coil 15 are thus passed through the stator protrusion 13A, stator 13, stator pole 14, rotor pole 12 and rotor 11 as shown in Fig. 1B. Although every coil has the same number of turns, the induced voltage of each coil varies depending on the degree of proximity between rotor pole 12 and stator pole 14, i.e., the degree of magnetic coupling therebetween. The total of the voltages induced in the coils $S_1$, $S_2$, $S_3$ and $S_4$ shown in the drawing is produced at the sine coil 16. In similar manner, the total of the voltages induced in the shown coils $C_1$, $C_2$, $C_3$ and $C_4$ is obtained at the cosine coil 17.

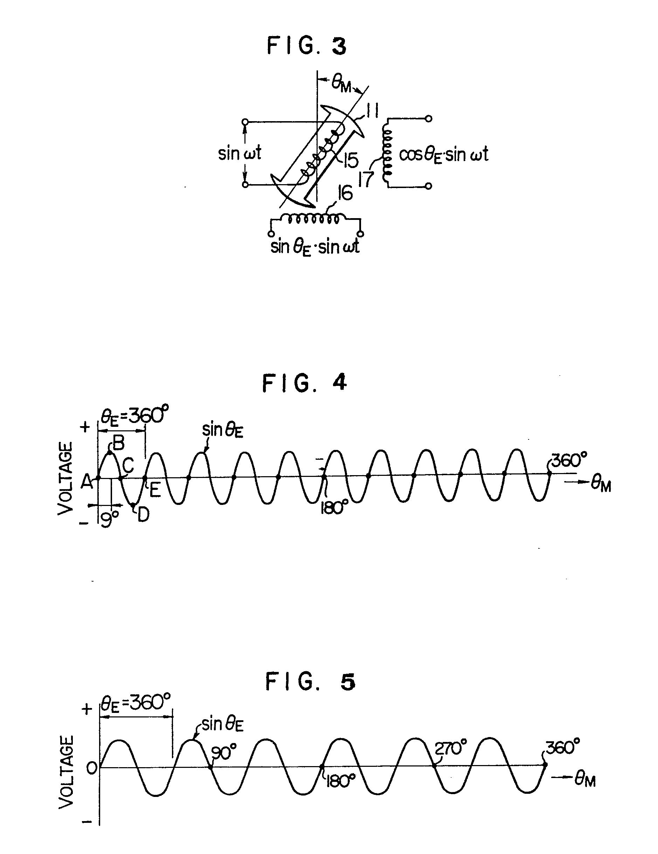

Next, explanation will be made of the operation for producing an output voltage with the rotation of the resolver upon excitation of the central coil with reference to Figs. 2A to 2E and Fig. 4.

(1) In the case where the rotor pole $B_1$ is opposed to or aligned with the stator pole $P_1$ (Fig. 2A):

The rotor pole $B_6$ and the stator pole $P_5$ are also aligned with each other so that the degree of magnetic coupling between coils $C_1$ and $C_3$ is maximum, thus producing the maximum voltage. On the other hand, the magnetic coupling between coils $C_2$ and $C_4$ is small, thus producing a minimum voltage. The coils $C_2$ and $C_4$ are wound in the direction opposite to the coils $C_1$ and $C_3$, so that the cosine coil 17 produces the voltage $\cos\theta_E \cdot \sin\omega t$ which is equal to the sum of the voltage across coils $C_1$ and $C_3$ less the sum of the voltages across the coils $C_2$ and $C_4$. The degree of magnetic coupling between poles $P_2$ and $B_2$, between poles $P_4$ and $B_5$, between poles $P_6$ and $B_7$ and between poles $P_8$ and $B_{10}$ are substantially equal to each other. Therefore, the sum of the voltages across coils $S_1$ and $S_3$ less the sum of the voltages across the coils $S_2$ and $S_4$ is substantially zero, so that the output voltage $\sin\theta_E \cdot \sin\omega t$ of the sine coil 16 is zero.

Referring to Fig. 4 showing the value of $\sin\theta_E$ which is the sine component of the rotational angle of the rotor, the value of $\sin\theta_E$ of the voltage $\sin\theta_E \cdot \sin\omega t$ obtained from the sin coil 16 when the rotor pole $B_1$ is aligned with stator pole $P_1$ is zero as shown by point A.

(2) In the case where the rotor pole $B_2$ is aligned with stator pole $P_2$ (Fig. 2B):

In Fig. 2A, the angular displacement between stator pole $P_2$ and rotor pole $B_2$ is 1/40 (=1/8—1/10) of a rotation, i.e., 9 degrees (=45—36 degrees). Thus when the rotor 11 makes 1/40 of a rotation, i.e., 9 degrees from the position shown in Fig. 2A, it achieves the state shown in Fig. 2B. Since the pole $B_7$ is aligned with pole $P_6$ and the coils $S_1$ and $S_3$ are coupled magnetically to the greatest degree, a maximum voltage is produced. The coils $S_2$ and $S_4$ are magnetically coupled with each other to the lowest degree, and therefore a minimum voltage is produced therefrom. The coils $S_2$ and $S_4$ are wound in the direction opposite to the coils $S_1$ and $S_3$ as described above, so that the sine coil 16 produces an output voltage $\sin\theta_E \cdot \sin\omega t$ which is equal to the sum of the voltages across the coils $S_1$ and $S_3$ less the sum of the voltages across coils $S_2$ and $S_4$. The value of $\sin\theta_E$ is shown by point B in Fig. 4. The degree of magnetic coupling between poles $P_1$ and $B_1$, between $P_3$ and $B_3$, between $P_5$ and $B_6$ and between $P_7$ and $B_8$ are substantially equal to each other, with the result that the sum of the voltages across the coils $C_1$ and $C_3$ less the sum of voltages across the coils $C_2$ and $C_4$ is

substantially zero. Thus the output voltage cos $\theta_E \cdot \sin \omega t$ of the cosine coil 17 is substantially zero.

(3) In the case where the rotor pole $B_3$ is aligned with stator pole $P_3$ (Fig. 2C):

When the rotor 11 makes 1/40 of a rotation or 9 degrees from the position of Fig. 2B, the state shown in Fig. 2C is attained. The pole $B_8$ is also aligned with the pole $P_7$, and the degree of magnetic coupling between coils $C_2$ and $C_4$ is maximum, thus producing the maximum voltage. On the other hand, the degree of magnetic coupling between coils $C_1$ and $C_3$ is lowest and therefore a minimum voltage is produced. Since the coils $C_1$ and $C_3$ are wound in the direction opposite to the direction of coils $C_2$ and $C_4$, the cosine coil 17 produces an output voltage cos $\theta_E \cdot \sin \omega t$ which is equal to the sum of the voltages across the coils $C_2$ and $C_4$ less the sum of the voltages across the coils $C_1$ and $C_3$.

In this case, the phase of the output voltage is displaced by 180 degrees from that in the case of Fig. 2A. The degree of magnetic coupling between poles $P_2$ and $B_2$, between $P_4$ and $B_4$, between $P_6$ and $B_7$ and between $P_8$ and $B_9$ are substantially the same. The sum of the voltages across the coils $S_2$ and $S_4$ less the sum of the voltages across the coils $S_1$ and $S_3$ is zero, so that the output voltage sin $\theta_E \cdot \sin \omega t$ of the sine coil 16 is substantially zero. The value of sin $\theta_E$ is indicated by point C in Fig. 4.

(4) In the case where rotor pole $B_4$ is aligned with stator pole $P_4$ (Fig. 2D):

When the rotor 11 makes 1/40 of a rotation from the position of Fig. 2C, the state of Fig. 2D is attained. The pole $B_9$ is also aligned with pole $P_8$ and the degree of magnetic coupling between coils $S_2$ and $S_4$ is maximum, thus producing a maximum voltage. On the other hand, the degree of magnetic coupling between coils $S_1$ and $S_3$ is lowest, and therefore both $S_1$ and $S_3$ produce a minimum voltage. The coils $S_1$ and $S_3$ are wound in the direction opposite to that of the coils $S_2$ and $S_4$, and therefore the sine coil 16 produces an output voltage sin $\theta_E \cdot \sin \omega t$ which is the sum of the voltages across the coils $S_2$ and $S_4$ less the sum of voltages across coils $S_1$ and $S_3$. In this case, however, the phase of the output voltage is displaced by 180 degrees from that in the case of Fig. 2B. The value of sin $\theta_E$ is indicated by point D in Fig. 4. The degree of magnetic coupling between $P_1$ and $B_{10}$, between $P_3$ and $B_3$, between $P_5$ and $B_5$ and between $P_7$ and $B_8$ are substantially equal to each other. The sum of the voltages across the

coils $C_2$ and $C_4$ less the sum of the voltages across the coils $C_1$ and $C_3$ is substantially zero, so that the output voltage cos $\theta_E \cdot \sin \omega t$ of the cosine coil 17 is substantially zero.

(5) In the case where the rotor pole $B_5$ is aligned with stator pole $P_5$ (Fig. 2E):

When the rotor 11 makes 1/40 of a rotation from the position of Fig. 2D, the state of Fig. 2E is attained. The pole $B_{10}$ is aligned with the pole $P_1$, which is quite the same electrical situation as that shown in Fig. 2A. In other words, the rotor 11 returns to quite the same state electrically as the original state after making 1/10 (=1/40×4) of a rotation as shown progressively in Figs. 2A, 2B, 2C, 2D and 2E in that order, the 1/10 rotation of the rotor 11 being equivalent to the electrical angle of 360 degrees. The value of sin $\theta_E$ is indicated by point E in Fig. 4.

In the above-mentioned embodiment, the rotor has ten poles, and therefore one mechanical rotation of the rotor 11 corresponds to ten times the electrical angle of 360 degrees, thus indicating a resolver of 20 poles.

It is seen from the diagram of Fig. 3 for explaining the operating principle that upon excitation of the central coil 15 by the sine wave of, say, 10 KHz, the rotation of rotor 11 by the mechanical angle of $\theta_M$ causes the output wave forms of cos $\theta_E \cdot \sin \omega t$ and sin $\theta_E \cdot \sin \omega t$ to be produced from the cosine coil 17 and the sine coil 16 respectively. The character $\theta_E$ shows an electrical angle, and there is a well-known relation shown below between the mechanical angle $\theta_M$ and the number of poles N.

$$\theta_E = \frac{N}{2} \theta_M$$

In the foregoing embodiment of the present invention, the central coil 15 is used as the primary coil and the sine coil 16 and the cosine coil 17 as the secondary coil. They may of course be used in reverse way.

Further although the above-mentioned embodiment of the present invention employs eight stator poles and ten rotor poles, it is not limitative but only illustrative. In other words, the number of stator poles n times 4 and the number of rotor poles n times 5 or 3 may be used alternatively as shown in Table 1 below. It is in order to obtain sine and cosine outputs that the number of stator poles n times 4 is employed.

Table 1

| n | Number of stator poles | — | Number of rotor poles | Number of resolver poles | Number of stator poles | — | Number of rotor poles | Number of resolver poles |
|---|---|---|---|---|---|---|---|---|
| 1 | 4 | — | 5 | 10 | 4 | — | 3 | 6 |
| 2 | 8 | — | 10 | 20 | 8 | — | 6 | 12 |
| 3 | 12 | — | 15 | 30 | 12 | — | 9 | 18 |
| 4 | 16 | — | 20 | 40 | 16 | — | 12 | 24 |
| 5 | 20 | — | 25 | 50 | 20 | — | 15 | 30 |
| . | . | . | . | . | . | . | . | . |
| . | . | . | . | . | . | . | . | . |
| . | . | . | . | . | . | . | . | . |

An output waveform in a multipolar resolver according to another embodiment is shown in Fig. 5. This voltage waveform represents a sine component of the rotor rotational angle produced by a 12-pole resolver having eight stator poles and 6 rotor poles. As explained above, the multipolar resolver according to the present invention has a coil only on the stator but not on the rotor. This eliminates the need of the slip ring on the one hand and simplifies the general construction on the other hand, leading to many advantages in cost and maintenance.

Furthermore, by introducing the vernier concept, the fabrication of a multipolar resolver having 20 or more poles is greatly facilitated, resulting in the conspicuous dual advantages of a greater number of divisions available for each rotor rotation and a higher accuracy of each rotor rotation without structural or dimensional limitations. The higher accuracy means that it is no longer necessary to drive the resolver at high speed by raising the gear ratio, leading to the advantage that the resolver may be directly coupled to the motor shaft in numerically controlled machine tool field. Since the resolver according to the present invention is adapted to be directly coupled to the motor shaft without sacrificing the required accuracy, the resolver may be constructed integrally with the motor, thus greatly contributing to a simplified detecting mechanism. Also, the availability of an increased number of divisions makes possible reliable detection of a speed component.

**Claims**

1. A multipolar resolver comprising a substantially cylindrical coil free rotor of magnetic material with A×n rotor poles provided equidistantly on the outer periphery thereof, a cup-shaped stator of magnetic material with B×n stator poles provided equidistantly along the circumference concentric with the axis of said rotor, wherein A and B and n are positive integers and wherein the value of A differs from the value of B by one, such that $|A-B|=1$, and a central coil provided on said stator along substantially the same axis as said rotor axis, three-dimensional magnetic paths extending from said central coil through the base of the stator, through said stator poles parallel to the axis of the rotor and then through the rotor back to said coil such that the direction of the magnetic flux is the same in all stator poles, characterized in that: the value of n is greater than 1; sine and cosine coils (S1—S4; C1—C4) are wound alternately on circumferentially successive ones of said stator poles (P2, P4, P6, P8; P1, P3, P5, P7), each stator pole carrying either a sine or a cosine coil; circumferentially successive ones of said sine coils are connected in series with each other and are wound with the same number of turns in opposite directions of winding alternately; circumferentially successive ones of said cosine coils are connected in series with each other and are wound with the same number of turns in opposite directions of winding alternately; and the value of B is equal to 4.

2. A multipolar resolver according to claim 1, characterised in that A=5.

3. A multipolar resolver according to claim 1, characterised in that A=3.

**Patentansprüche**

1. Ein Multipolardrehmelder mit einem im wesentlichen zylindrischen wicklungsfreien Rotor aus magnetischem Material mit A·n Rotorpolen, die unter gleichen Abständen am Außenumfang des Rotors verteilt sind, mit einem schalenförmigen Stator aus magnetischem Material mit B·n Statorpolen, die unter gleichen Abständen entlang des Umfanges konzentrisch zur Achse des Rotors angeordnet sind, wobei A und B und n positive ganze Zahlen sind und wobei der Wert von A von dem Wert von B um 1 derart abweicht, daß $|A-B|=1$ ist, und mit einer in der Mitte angeordneten Wicklung, die an dem Stator entlang im wesentlichen der gleichen Achse wie die Rotorachse angeordnet ist, wobei sich dreidimensionale magnetische Pfade von der in der Mitte angeordneten Wicklung durch die Basis des Stators, durch die Statorpole parallel zur Achse des Rotors und dann durch den Rotor zurück zur Wicklung derart erstrecken, daß die Richtung des Magnetflusses in allen Statorpolen gleich ist, dadurch gekennzeichnet, daß der Wert von n größer als 1 ist, daß Sinus- und Cosinus-Wicklungen ($S_1$—$S_4$; $C_1$—$C_4$) abwechselnd auf am Umfang aufeinanderfolgende Statorpole ($P_2$, $P_4$, $P_6$, $P_8$; $P_1$, $P_3$, $P_5$, $P_7$) gewickelt sind, daß am Umfang aufeinanderfolgende Sinus-wicklungen in Serie miteinander geschaltet sind und mit der gleichen Windungszahl abwechselnd mit entgegengesetzten Wicklungsrichtungen gewickelt sind, und daß am Umfang aufeinanderfolgende Cosinuswicklungen in Serie miteinander verbunden und mit der gleichen Anzahl von Windungen abwechselnd mit entgegengesetzten Wicklungsrichtungen gewickelt sind, wobei der Wert von B=4 ist.

2. Multipolardrehmelder nach Anspruch 1, dadurch gekennzeichnet, daß A=5 ist.

3. Multipolardrehmelder nach Anspruch 1, dadurch gekennzeichnet, daß A=3 ist.

**Revendications**

1. Dispositif multipolaire de résolution comprenant un rotor sensiblement cylindrique, sans enroulement, en une matière magnétique, avec A×n pôles rotoriques équidistants sur sa circonférence, un stator en forme de cuvette, en une matière magnétique, avec B×n pôles statoriques équidistants le long de la circonférence concentrique à l'axe dudit rotor, A et B et n étant des nombres entiers positifs et la valeur de A différant de la valeur de B, par rapport à un, de telle sorte que | A—B |=1, et un enroulement central placé sur ledit stator pour l'essentiel le long du même axe que ledit axe du rotor, des trajets magnétiques tridimensionnels s'étendant à partir dudit enroulement central à travers la base du stator, à travers lesdits pôles statoriques parallèles à l'axe du rotor, puis à travers ledit rotor, pour retourner ensuite audit enroulement de telle sorte que la direction du flux magnétique soit la même dans tous les pôles statoriques, caractérisé par le fait que: la valeur de *n* est supérieure à 1; des enroulements sinusoïdaux et cosinusoïdaux (S1—S4; C1—C4) sont entourés alternativement sur lesdits pôles statoriques (P2, P4, P6, P8; P1, P3, P5, P7) qui se succèdent circonférentiellement, chaque pôle statorique supportant soit un enroulement sinusoïdal, soit un enroulement cosinusoïdal; lesdits enroulements sinusoïdaux qui se succèdent circonférentiellement sont raccordés en série les uns aux autres et sont enroulés avec le même nombre de spires dans des directions d'enroulement opposées, alternativement; lesdits enroulements cosinusoïdaux qui se succèdent circonférentiellement sont raccordés en série les uns aux autres et sont enroulés avec le même nombre de spires dans des directions d'enroulement opposées, alternativement; et la valeur de B est égale à 4.

2. Dispositif multipolaire de résolution selon la revendication 1, caractérisé par le fait que A=5.

3. Dispositif multipolaire de résolution selon la revendication 1, caractérisé par le fait que A=3.

FIG. 1A

FIG. 1B

FIG. 2A

FIG. 2B

FIG. 2C

FIG. 2D

FIG. 2E

# FIG. 3

$$\theta_M$$

$$\sin \omega t$$

11
15
16
17

$$\cos \theta_E \cdot \sin \omega t$$

$$\sin \theta_E \cdot \sin \omega t$$

# FIG. 4

VOLTAGE

$$+$$

$$\theta_E = 360°$$

$$\sin \theta_E$$

A
B
C
E
D

$$9°$$

$$-$$

$$180°$$

$$360°$$

$$\theta_M$$

# FIG. 5

VOLTAGE

$$+$$

$$\theta_E = 360°$$

$$\sin \theta_E$$

O

$$90°$$

$$180°$$

$$270°$$

$$360°$$

$$-$$

$$\theta_M$$